# DEMANDE DE BREVET EUROPEEN

(11) **EP 1 832 766 A2**
(43) Date de publication de la demande: **12.09.2007**
(21) Numéro de dépôt: 07290281.0
(22) Date de dépôt: 05.03.2007
(51) Int. Cl.: F16C 33/44, F16C 33/66

(54) **Procédé de lubrication d'un dispositif de transmission de couple**

(30) Priorité: 06.03.2006 FR 0602003
(71) Demandeur: SNR ROULEMENTS, 74000 Annecy (FR)
(72) Inventeur: Sidoroff Coicaud, Christine, 74570 Thorens Glieres (FR)
(74) Mandataire: Sayettat, Julien Christian

(57) **Abrégé**

L'invention concerne un procédé de lubrification d'un dispositif de transmission de couple, ledit dispositif comprenant une enceinte dans laquelle au moins un organe de transmission de couple et au moins un palier à roulement de guidage en rotation dudit organe sont disposés, ledit palier comprenant un organe fixe (1) et un organe tournant (2) formant entre eux un espace de roulement (4) dans lequel des corps roulants (3) sont disposés pour permettre la rotation relative desdits organes, ledit procédé prévoyant de disposer dans l'enceinte un lubrifiant pour l'organe de transmission de couple et de disposer dans l'espace de roulement (4) une matrice polymère poreuse (5) qui emprisonne un lubrifiant pour le fonctionnement du palier, ladite matrice poreuse étant prévue pour être en contact avec les corps roulants (3), au moins sur une partie de leur périphérie. L'invention concerne également un tel dispositif de transmission de couple.

## Description

L'invention concerne un procédé de lubrification d'un dispositif de transmission de couple comprenant une enceinte dans laquelle au moins un organe de transmission de couple et au moins un palier à roulement de guidage en rotation dudit organe sont disposés, ainsi qu'un tel dispositif de transmission de couple.

Dans les réalisations connues, la lubrification des roulements de dispositifs de transmission de couple tels que les boîtes de vitesses de véhicule automobile est assurée par projection, à l'intérieur de l'espace de roulement, de l'huile contenue dans le carter de la boîte, les projections étant provoquées par la rotation d'organes à l'intérieur de ladite boîte.

En outre, pour permettre le fonctionnement initial du roulement dans des conditions de lubrification acceptables, l'art antérieur prévoit de disposer une quantité de graisse à l'intérieur de l'espace de roulement.

Toutefois, ce type de lubrification pour un roulement de boîte de vitesses présente un certain nombre de limitations, qui sont d'autant plus pénalisantes que la durée de vie du roulement est très fortement dépendante de son état de lubrification en fonctionnement.

Parmi ces limitations, on peut citer le fait que la graisse contenue initialement dans l'espace de roulement a tendance à être lavée par les projections d'huile de la boîte. Dans le temps, il en résulte un fonctionnement initial du roulement, notamment à froid, dans des conditions de sous lubrification qui sont critiques pour sa fiabilité.

En outre, un lubrifiant assurant un bon fonctionnement d'une boîte de vitesses n'est généralement pas optimal pour la lubrification d'un roulement, et ce d'autant plus que les conditions de fonctionnement d'un roulement de boîte de vitesses sont particulièrement sévères.

Enfin, la quantité de lubrifiant reçu par le roulement dépend fortement de son positionnement à l'intérieur du carter de la boîte de vitesses, ce qui dans certaines intégrations peut conduire à faire fonctionner des roulements en sous lubrification quasi-permanente.

Par ailleurs, lorsque le lubrifiant de la boîte de vitesses est pollué, notamment par des particules d'usure, lesdites particules sont introduites par projection du lubrifiant dans l'espace de roulement. Il en résulte la formation d'indentations sur les pistes de roulements, qui peuvent provoquer un écaillage de celles-ci et donc une possible défaillance prématurée du roulement.

Pour résoudre ce problème, il a été proposé de réaliser un compromis entre une étanchéité de l'espace de roulement de sorte à empêcher la pénétration des polluants, tout en laissant passer une quantité du lubrifiant de la boîte qui est suffisante pour assurer une lubrification acceptable du roulement.

Typiquement, ces solutions prévoient des déflecteurs qui sont agencés pour présenter un jeu précis avec des surfaces des bagues du roulement. Toutefois, se pose le problème de la conservation dans le temps de ce jeu, notamment dans un milieu agressif tel que celui régnant à l'intérieur d'un carter d'une boîte de vitesses. En outre, l'évolution des huiles de boîte de vitesses va dans le sens d'une plus grande fluidité, ce qui complique encore la réalisation pratique du compromis mentionné ci-dessus.

L'invention a pour but de surmonter les limitations mentionnées ci-dessus en proposant notamment un procédé qui permet de lubrifier un roulement de boîte de vitesses de façon à la fois autonome et sensiblement indépendante par rapport à la lubrification de ladite boîte, de sorte à s'affranchir des problèmes de pollution du lubrifiant de boîte et à optimiser la lubrification du roulement en fonction de ses contraintes propres de fonctionnement.

A cet effet, et selon un premier aspect, l'invention propose un procédé de lubrification d'un dispositif de transmission de couple, ledit dispositif comprenant une enceinte dans laquelle au moins un organe de transmission de couple et au moins un palier à roulement de guidage en rotation dudit organe sont disposés, ledit palier comprenant un organe fixe et un organe tournant formant entre eux un espace de roulement dans lequel des corps roulants sont disposés pour permettre la rotation relative desdits organes, ledit procédé prévoyant de disposer dans l'enceinte un lubrifiant pour l'organe de transmission de couple et de disposer dans l'espace de roulement une matrice polymère poreuse qui emprisonne un lubrifiant pour le fonctionnement du palier, ladite matrice poreuse étant prévue pour être en contact avec les corps roulants, au moins sur une partie de leur périphérie.

Selon un deuxième aspect, l'invention propose un dispositif de transmission de couple comprenant une enceinte dans laquelle au moins un organe de transmission de couple et au moins un palier à roulement de guidage en rotation dudit organe sont disposés, ledit palier comprenant un organe fixe et un organe tournant formant entre eux un espace de roulement dans lequel des corps roulants sont disposés pour permettre la rotation relative desdits organes, ladite enceinte comprenant un lubrifiant pour l'organe de transmission de couple et ledit espace de roulement comprenant une matrice polymère poreuse qui emprisonne un lubrifiant pour le fonctionnement du palier, ladite matrice poreuse étant prévue pour être en contact avec les corps roulants, au moins sur une partie de leur périphérie.

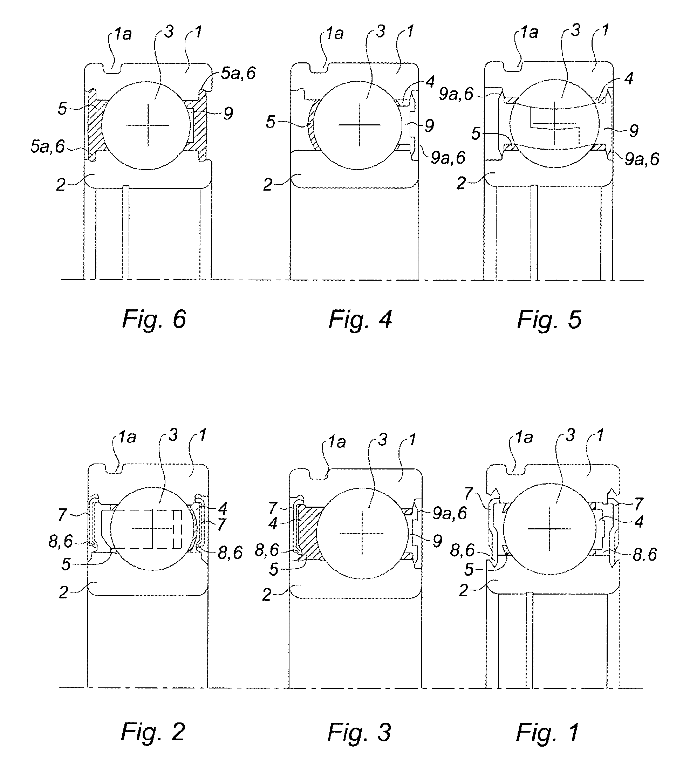

D'autres particularités et avantages de l'invention apparaîtront dans la description qui suit faite en référence aux figures jointes dans lesquelles les figures 1 à 6 sont des représentations en coupe longitudinale partielle d'un roulement pour un dispositif de transmission de couple selon respectivement un mode de réalisation de l'invention.

L'invention concerne un procédé de lubrification d'un dispositif de transmission de couple comprenant une enceinte dans laquelle au moins un organe de transmission de couple et au moins un palier à roulement de guidage en rotation dudit organe sont disposés. Le procédé prévoit de disposer dans l'enceinte un lubrifiant pour l'organe de transmission de couple.

Dans un exemple de réalisation, le dispositif de transmission de couple est une boîte de vitesses de véhicule automobile qui comprend un carter dans lequel un lubrifiant, typiquement une huile, est disposé pour lubrifier notamment les pignons de transmission de couple. Ainsi, de façon principale, le lubrifiant contenu dans le carter rempli sa fonction relativement aux organes de la boîte de vitesses qui sont en mouvement dans le carter, notamment relativement aux pignons de ladite boîte.

Toutefois l'invention n'est pas limitée à cet exemple de réalisation particulier, et peut s'appliquer à d'autres dispositifs de transmission de couple, ainsi qu'à des organes de transmission de couple autres que des pignons.

Pour guider la rotation des organes tournants contenus dans le carter, des paliers à roulement sont prévus dans ledit carter, lesdits paliers étant en contact avec le lubrifiant contenu dans ledit carter.

A cet effet, les paliers comprennent un organe fixe destiné à être solidarisé à une partie fixe de la boîte de vitesses, par exemple à son carter, et un organe tournant destiné à être solidarisé à un organe de transmission de couple contenu dans ledit carter.

Les organes fixe et tournant du palier forment entre eux un espace de roulement dans lequel des corps roulants sont disposés pour permettre la rotation relative desdits organes.

En relation avec les figures 1 à 6, on décrit un tel palier formé d'un roulement destiné à être disposé dans le carter d'une boîte de vitesses de véhicule automobile. Le roulement comprend une bague extérieure fixe 1, une bague intérieure tournante 2 et des billes 3 disposées dans l'espace de roulement 4. En variante, on peut prévoir des organes, des corps roulants et/ou des espaces de roulements qui présentent des géométries différentes en fonction des contraintes spécifiques de l'application visée. Selon les modes de réalisation représentés, la bague extérieure 1 comprend une gorge 1a destinée à recevoir un anneau d'arrêt permettant d'immobiliser le roulement dans la boîte de vitesses.

Le procédé de lubrification prévoit de disposer dans l'espace de roulement 4 une matrice polymère poreuse 5 qui emprisonne un lubrifiant pour le fonctionnement du palier.

Selon un mode de réalisation, la matrice polymère poreuse 5 est réalisée à base d'un polymère thermoplastique ou thermodurcissable dans lequel une grande quantité de lubrifiant est mélangée. Le mélange est ensuite introduit dans l'espace de roulement 4 puis réticulé, par exemple par chauffage, pour assurer sa rigidification. On obtient ainsi une matrice polymère 5 qui est figée dans l'espace de roulement 4, ladite matrice comprenant des porosités dans lesquelles le lubrifiant est emprisonné.

Dans un exemple de réalisation, le polymère est à base de polyéthylène et le lubrifiant est une huile, une graisse ou un mélange d'une huile et d'une graisse.

En dosant la quantité de mélange introduit dans l'espace de roulement 4, il est possible de mettre en contact la matrice poreuse 5 avec les corps roulants 3, au moins sur une partie de leur périphérie. Selon une réalisation particulière, la matrice poreuse 5 est prévue pour enrober au moins la surface libre des corps roulants 3. En particulier, la matrice poreuse 5 peut être prévue pour comprendre un corps annulaire dans lequel les corps roulants 3 sont enrobés.

Lors du fonctionnement du roulement, l'invention permet d'alimenter en lubrifiant les corps roulants 3 au plus près du contact de roulement, et ce sans risque d'éjection du lubrifiant en dehors de l'espace de roulement 4. Le roulement est donc autonome relativement à sa lubrification.

En outre, le remplissage au moins partiel de l'espace de roulement 4 avec la matrice polymère 5 permet de limiter les rentrées d'huile de boîte dans ledit espace, limitant ainsi les détériorations potentielles qui pourraient être provoquées par des polluants contenus dans ladite huile. Selon une réalisation particulière, la matrice poreuse 5 est prévue pour remplir sensiblement tout l'espace de roulement 4.

Par ailleurs, la disposition du lubrifiant du roulement dans la matrice poreuse 5 permet de protéger ledit lubrifiant de l'extérieur, de sorte notamment à éviter son lavage par l'huile de boîte. La matrice poreuse 5 forme donc réserve de lubrifiant pour le roulement, et ce tout au long de sa durée de vie. En outre, on peut choisir un lubrifiant de roulement qui est optimal pour cette utilisation, sans contrainte relativement à la lubrification de la boîte ou à une interaction avec le lubrifiant de ladite boîte.

En particulier, on peut prévoir une boîte de vitesses dans laquelle le lubrifiant emprisonné dans la matrice poreuse 5 est différent de celui contenu dans le carter.

Par ailleurs, l'utilisation d'une matrice poreuse 5 peut permettre à l'huile de boîte d'atteindre le contact de roulement par capillarité sans laisser passer les polluants. Ainsi, le mélange entre l'huile de boîte et le lubrifiant contenu dans la matrice poreuse 5 peut être choisi pour améliorer le fonctionnement du palier.

En outre, en fonction des applications visées, on peut choisir un couple polymère - lubrifiant parmi un grand nombre de combinaisons, ce qui rend le procédé de lubrification particulièrement polyvalent.

En relation avec les figures 1 à 6, on décrit six modes de réalisation d'un roulement pour boîte de vitesses, dans lequel au moins un coté de l'espace de roulement 4 est délimité axialement par un moyen formant déflecteur 6 entre l'extérieur du roulement et ledit espace de roulement. Le moyen déflecteur 6 permet notamment de limiter le contact direct entre le lubrifiant de la boîte et les pistes de roulement prévues sur chacune des bagues 1, 2. En particulier, le moyen déflecteur 6 permet de filtrer les éventuels polluants contenus dans le lubrifiant de boîte de sorte à limiter leur introduction dans l'espace de roulement 4.

Ainsi, le moyen déflecteur 6 permet de limiter, en combinaison avec la matrice poreuse 5, les interactions néfastes entre l'intérieur du carter et l'espace de roulement 4, notamment relativement à leur lubrifiant respectif. En particulier, les polluants sont filtrés par le moyen déflecteur 6 et la matrice poreuse 5 empêche le contact entre lesdits polluants et les pistes de roulement.

Sur les figures 1 et 2, l'espace de roulement 4 est délimité axialement de chaque côté respectivement par un joint comprenant une armature fixe 7 solidaire de la bague fixe 1 et, surmoulée sur ladite armature, une lèvre souple 8 en contact frottant sur la bague tournante 2.

Selon ces réalisations, la lèvre forme moyen déflecteur 6 en ce qu'elle vise à limiter les échanges entre l'extérieur du roulement et l'espace de roulement 4, notamment en empêchant le passage des corps solides. Toutefois, compte tenue de la fluidité de l'huile de boîte, la lèvre 8 en contact frottant peut laisser passer une partie du lubrifiant liquide.

Sur la figure 1, la matrice poreuse 5 est agencée pour enrober la périphérie des corps roulants 3, au voisinage des pistes de roulements qui sont formées sur chacune des bagues.

Sur la figure 2, la matrice poreuse 5 est agencée pour enrober la surface libre des corps roulants 3.

Sur les figures 3 à 5, au moins l'un des joints est remplacé par un moyen déflecteur 6 formé sur un bord extérieur d'une partie de la cage de rétention 9 des corps roulants 3 dans l'espace de roulement 4.

A cet effet, la cage 9 est réalisée selon l'enseignement du document FR-2 787 530, à savoir comprenant un corps annulaire pourvu de logements en forme de calotte hémisphérique débouchant sur un bord transversal dudit corps, l'autre bord comportant un déflecteur annulaire 9a s'étendant généralement radialement.

Selon cette réalisation, il est possible d'ajuster la disposition relative du déflecteur 9a et des bagues 1, 2 pour contrôler le passage du lubrifiant de la boîte à l'intérieur de l'espace de roulement 4. En particulier, les jeux entre le déflecteur 9a et les surfaces des bagues 1, 2 disposées en regard peuvent être ajustés pour limiter le passage des polluants contenus dans l'huile de boîte. Cette réalisation, en combinaison avec la présence de la matrice poreuse 5 dans l'espace de roulement 4, permet de protéger le roulement en évitant tout contact entre les polluants et les pistes de roulement.

En outre, on peut prévoir de renforcer au moins l'une des bagues 1, 2 du roulement pour, au cas où un tel contact se produirait, limiter les dégâts occasionnés. En particulier, un tel renforcement peut être obtenu par traitement spécifique d'au moins la surface de l'acier formant la bague 1, 2, par exemple par traitements thermiques, mécaniques ou thermochimiques connus.

Sur la figure 3, l'espace de roulement 4 est délimité axialement par un joint conforme à celui des figures 1 et 2, et un corps annulaire comprenant un déflecteur 9a. Dans cette réalisation, la matrice poreuse 5 remplit sensiblement tout l'espace de roulement 4.

Sur la figure 4, l'espace de roulement 4 est délimité d'un seul coté par un déflecteur 9a conformément à la figure 3. Ainsi, du coté opposé au déflecteur 9a, seule la matrice poreuse 5 assure la protection de l'espace de roulement 4. Pour ce faire, la matrice poreuse 5 est prévue pour enrober toute la surface libre des corps roulants 3, y compris la partie disposée en regard du déflecteur 9a.

Sur la figure 5, la cage de rétention est formée de deux corps pourvus chacun d'un déflecteur 9a, lesdits corps coopérant pour former des logements dans lesquels les corps roulants 3 sont retenus. Cette figure montre un remplissage total de l'espace de roulement 4 avec la matrice poreuse 5, depuis un déflecteur 9a jusqu'à l'autre déflecteur 9a.

La figure 6 représente un mode de réalisation dans lequel la matrice poreuse 5 comprend un corps annulaire sur chacun des bords extérieurs duquel un moyen formant déflecteur 5a est réalisé. En variante, on peut prévoir de réaliser un moyen déflecteur 5a sur un seul des bords de la matrice poreuse 5, l'autre coté de l'espace 4 pouvant être équipé conformément à l'un quelconque des modes de réalisation précédents.

Selon la figure 6, la matrice poreuse 5 permet, par sa présence dans la totalité de l'espace de roulement 4, d'éviter l'introduction d'éléments extérieurs dans l'espace de roulement. En outre, la matrice poreuse 5 intègre, en une même pièce, la fonction déflecteur 6 de sorte à limiter le contact direct entre le lubrifiant de la boîte et la zone de la matrice 5 qui est disposée au voisinage des pistes de roulements.

## Revendications

1. Procédé de lubrification d'un dispositif de transmission de couple, ledit dispositif comprenant une enceinte dans laquelle au moins un organe de transmission de couple et au moins un palier à roulement de guidage en rotation dudit organe sont disposés, ledit palier comprenant un organe fixe (1) et un organe tournant (2) formant entre eux un espace de roulement (4) dans lequel des corps roulants (3) sont disposés pour permettre la rotation relative desdits organes, ledit procédé prévoyant de disposer dans l'enceinte un lubrifiant pour l'organe de transmission de couple et de disposer dans l'espace de roulement (4) une matrice polymère poreuse (5) qui emprisonne un lubrifiant pour le fonctionnement du palier, ladite matrice poreuse étant prévue pour être en contact avec les corps roulants (3), au moins sur une partie de leur périphérie.

2. Procédé de lubrification selon la revendication 1, dans lequel la matrice poreuse (5) est prévue pour enrober la surface libre des corps roulants (3).

3. Procédé de lubrification selon la revendication 2, dans lequel la matrice poreuse (5) est prévue pour comprendre un corps annulaire dans lequel les corps roulants (3) sont enrobés.

4. Procédé de lubrification selon l'une quelconque des revendications 1 à 3, dans lequel la matrice poreuse (5) est prévue pour remplir sensiblement tout l'espace de roulement (4).

5. Procédé de lubrification selon l'une quelconque des revendications 1 à 4, dans lequel le lubrifiant pour le fonctionnement du palier est choisi parmi une huile, une graisse ou un mélange d'une huile et d'une graisse.

6. Dispositif de transmission de couple comprenant une enceinte dans laquelle au moins un organe de transmission de couple et au moins un palier à roulement de guidage en rotation dudit organe sont disposés, ledit palier comprenant un organe fixe (1) et un organe tournant (2) formant entre eux un espace de roulement (4) dans lequel des corps roulants (3) sont disposés pour permettre la rotation relative desdits organes, ladite enceinte comprenant un lubrifiant pour l'organe de transmission de couple et ledit espace de roulement (4) comprenant une matrice polymère poreuse (5) qui emprisonne un lubrifiant pour le fonctionnement du palier, ladite matrice poreuse étant prévue pour être en contact avec les corps roulants (3), au moins sur une partie de leur périphérie.

7. Dispositif de transmission de couple selon la revendication 6, dans lequel le lubrifiant emprisonné dans la matrice poreuse (5) est différent de celui contenu dans l'enceinte.

8. Dispositif de transmission de couple selon la revendication 6 ou 7, dans lequel au moins un côté de l'espace de roulement (4) est délimité axialement par un moyen formant déflecteur (6) entre l'extérieur du palier et ledit espace de roulement.

9. Dispositif de transmission de couple selon l'une quelconque des revendications 6 à 8, dans lequel le moyen formant déflecteur (6, 9a) est réalisé sur un bord extérieur d'au moins une partie d'une cage de rétention (9) des corps roulants (3) dans l'espace de roulement (4).

10. Dispositif de transmission de couple selon l'une quelconque des revendications 6 à 8, dans lequel la matrice poreuse (5) comprend un corps annulaire sur au moins un bord extérieur duquel le moyen formant déflecteur (6, 5a) est réalisé.
